# EUROPEAN PATENT SPECIFICATION

(11) **EP 2 268 574 B1**
(45) Date of publication and mention of the grant of the patent: **26.12.2012**
(21) Application number: 09728839.3
(22) Date of filing: 30.03.2009
(51) Int. Cl.: C01B 31/00, C01B 31/04, H01M 4/58, H01M 4/583, H01M 4/587

(54) **ANODE POWDERS FOR BATTERIES**
ANODENPULVER FÜR BATTERIEN
POUDRES D'ANODE POUR BATTERIES

(30) Priority: 31.03.2008 US 41150
(43) Date of publication of application: 05.01.2011
(73) Proprietor: Phillips 66 Company, Houston, TX 77210 (US)
(72) Inventor: MAO, Zhenhua, Ponca City OK 74604 (US); NANNI, Edward, J., Ponca City OK 74604 (US); CAREL, Mark, W., Ponca City OK 74604 (US); SOUTHARD, W., Mark, Ponca City OK 74604 (US); CHAHAR, Bharat, S., Houston TX 77041 (US)
(74) Representative: Hyden, Martin Douglas
(86) International application number: PCT/US2009/038827
(87) International publication number: WO 2009/123984

(56) References cited:
- WO-A-2007/066673
- CA-A1- 2 176 452
- US-B1- 6 803 150

## Description

### FIELD OF THE INVENTION

Embodiments of the inventions relate to anode powders for batteries.

### BACKGROUND OF THE INVENTION

Materials used for construction of batteries determine ability to meet requirements desired with respect to performance and safety. Prior anode materials include carbonaceous particles such as graphite powder. However, such prior materials may not provide suitable protection from hazardous situations caused by rapid discharge of the battery such as a short circuit. This potential issue is especially true for lithium-ion batteries. While light weight, high power batteries are desired, minimizing consequences of possible hazardous situations becomes a priority for battery designers and manufacturers and makers of equipment that use high power batteries. Further, batteries used in electric drive vehicles need to provide as much energy as possible in order to meet consumer demands. Again, the prior materials often fail to meet these requirements. Document CA 2176452 discloses a method for producing coated carbonaceous material by mixing a certain amount of petroleum or coal tar pitch with a carbonaceous powder and by pyorolysing the mixture.

Therefore, a need exists for improved battery materials and methods of making the materials.

### SUMMARY OF THE INVENTION

In one embodiment, a process of producing a powder of coated carbonaceous material includes milling regular coke into coke particles and depositing a coating of carbon residue forming material onto surfaces of the coke particles. The method further includes oxidizing the coke particles that are coated such that the oxidizing provides stabilized coated particles rendered infusible and graphitizing the stabilized coated particles to provide graphitized particles. The graphitized particles form the powder of coated carbonaceous material in which a BET surface area in square meters per gram is less than three minus average size of a longest dimension of the graphitized particles in microns times 0.183.

According to one embodiment, a powder of coated carbonaceous material includes carbonaceous milled particles having a coating layer. The coating layer is formed of an oxidized and graphitized carbon residue forming material. In addition, the particles within a sampling of the powder have a BET surface area in square meters per gram that is less than three minus average size of a longest dimension of the particles in microns times 0.183.

For one embodiment, a rechargeable battery includes anode powder formed of particles from milled regular coke precursor material and a carbon residue forming material coating thereon. The carbon residue forming material has been oxidatively stabilized and graphitized. A BET surface area of the particles within a sampling of the powder is defined in square meters per gram to be less than three minus the average size of the particles in microns times 0.183.

### BRIEF DESCRIPTION OF THE DRAWINGS

The invention, together with further advantages thereof, may best be understood by reference to the following description taken in conjunction with the accompanying drawings.

Figure 1 is a chart illustrating particle size distribution of a representative example of anode powder useful for producing batteries, according to one embodiment of the invention.

Figure 2 is a chart illustrating the particle size distribution depicted in Figure 1 along with particle size distributions of the anode powder prior to de-dusting and of rejected material, according to one embodiment of the invention.

Figure 3 is a chart illustrating relationship of particle size and BET surface area of a number of anode powders including example anode powders, according to one embodiment of the invention.

Figure 4 is an image from a scanning electron microscope of powder particles, according to one embodiment of the invention.

Figure 5 is an image from a scanning electron microscope of powder particles made from a formerly preferred precursor material.

### DETAILED DESCRIPTION OF THE INVENTION

Lithium-ion batteries store energy by intercalating lithium atoms into materials that are bonded to a metallic foil. This metallic foil is in electrical contact with the negative electrode of the battery. These materials that are bonded to the metal foil of the negative electrode are referred to as anode materials. Prior to being bonded, the anode materials are a fine powder and thus are also referred to as anode powders.

The anode powders may provide improved performance over currently existing anode materials especially during rapid discharge or elevated temperature operating environments. While aspects described herein may be used in combination, each aspect may be used independently of the other.

Anode powders may be manufactured by a process that generally comprises the steps of: providing particles of a carbonaceous material; providing a coating of a fusible, carbon-residue-forming material onto the surface of said particles; stabilizing the coated particles by subjecting said particles to an oxidation reaction using an oxidizing agent; carbonizing the stabilized, coated particles; and, optionally, graphitizing the coated particles. The process may provide particles having substantially smooth coatings.

Embodiments utilize particles of carbonaceous material. Sources of carbonaceous materials include calcined or un-calcined (green) petroleum cokes. Fine particles of such materials are conveniently provided by milling, crushing, grinding or by any other means which can be used to provide a pulvurent carbonaceous material having particles of dimensions which are suitable for use in the formation of electrodes. Although applicable to carbonaceous particles of varying sizes and particle size distributions, carbonaceous particles in some embodiments have average particle sizes of up to about 150 µm, from about 5 µm to about 70 µm, or in the range of about 3 µm to about 45 µm. Further, the particle size distribution within any ranges may be such that not more than 10 weight % of the particles are smaller than 5 µm, not more than 10 weight % of the particles are larger than 60 µm.

The carbonaceous particles are provided with a fusible, carbon-residue-forming material as a coating material. Examples for use as the coating material are carbon-residue-forming materials which can be reacted with an oxidizing agent. Exemplary compounds include those with a high melting point and a high carbon yield after thermal decomposition. Exemplary useful coating materials include heavy aromatic residues from petroleum, chemical process pitches; lignin from pulp industry; phenolic resins, and carbohydrate materials such as sugars and polysaccharides. Examples for use as coating materials are petroleum and coal tar pitches, and lignin which are readily available and have been observed to be effective as fusible, carbon-residue-forming materials.

It is to be understood that the carbon-residue-forming material may be any material which, when oxidized and then thermally decomposed in an inert atmosphere to a carbonization temperature of 850°C or an even greater temperature forms a residue which is "substantially carbon." It is to be understood that "substantially carbon" indicates that the residue is at least 90% by wt. carbon, or at least 95% by wt. carbon. The carbon-residue-forming material may form at least 10%, at least 40%, or at least 60% carbon residue on carbonization, based on the original mass of the carbon-residue-forming material.

Any organic compound that can be oxidized and then thermally decomposed to yield carbon residue can be used as the coating material. However, in coating processes in which the organic compounds are dissolved in solvent, aromatic compounds that include various molecular weights may be chosen because of mutual dissolution of the compound with the solvent(s). Exemplary compounds include those with a high melting point and a high carbon yield after thermal decomposition (e.g., petroleum and coal tar pitches).

Any useful technique for coating the carbonaceous particles may be used. By way of non-limiting examples, useful techniques include the steps of: liquefying the carbon-residue-forming material by a means such as melting or forming a solution with a suitable solvent combined with a coating step such as spraying the liquefied carbon-residue-forming material onto the carbonaceous particles, or dipping the carbonaceous particles in the liquefied carbon-residue-forming material and subsequently drying out any solvent. Further useful techniques include selective precipitation of a carbon-residue-forming material on the carbonaceous particles.

A further technique which may be used includes providing a dry coating of the carbon-residue-forming material onto the carbonaceous particles such as by mixing or tumbling these materials until a coating of the carbon-residue-forming material is provided on the surface of the carbonaceous particles, after which the dry coating is then fused to provide a coating upon the surface of the carbonaceous particles. While any of these coating techniques may be practiced, methods described herein include those which provide a relatively uniform coating thickness of the carbon-residue-forming material on the carbonaceous particles and which minimize clumping or agglomeration of the coated particles. The amount of the carbon-residue-forming material deposited on the carbonaceous particles may also vary widely, and it is understood that this amount depends in part on factors including the uniformity of the coating and the specific form and surfaces of the carbonaceous particles. Although the amount of coating may vary from as little as 1 wt% to as much as 50 wt%, expressed as the percentage of the mass of the coating relative to the total mass of the coated particles as measured by weighing the dry particles before and after coating, the amount of coating in some embodiments ranges from about 2.5 wt% to about 25 wt%, or from about 5 wt% to about 20 wt%.

One method of forming a uniform coating of a carbon-residue-forming material by precipitating the material onto the surface of the particles is provided according to the following process. First, a concentrated solution of the carbon-residue-forming material in a suitable solvent is formed. The solution of carbon-residue-forming material is prepared by combining the carbon-residue-forming material with a solvent or a combination of solvents. The solvent should be compatible with the carbon-residue-forming, i.e., coating, material and should dissolve all or a substantial portion of the coating material. Solvents include pure organic compounds or a mixture of different solvents. The choice of solvent(s) depends on the particular coating material used. Suitable solvents for dissolving the carbon-residue-forming material include, for example, benzene, toluene, xylene, quinoline, tetrahydrofuran, naphthalene, acetone, cyclohexane, tetrahydronaphthalene (sold by DuPont under the trademark Tetralin), ether, water, methyl-pyrrolidinone, etc. When a petroleum or coal tar pitch is used as the carbon-residue-forming material, for example, solvents may include toluene, xylene, quinoline, tetrahydrofuran, Tetralin® and naphthalene. The ratio of the solvent(s) to the carbon-residue-forming material in the solution and the temperature of the solution is controlled so that the carbon-residue-forming material completely or almost completely dissolves into the solvent. Typically, the solvent to carbon-residue-forming material ratio is less than 2, or about 1 or less, and the carbon-residue-forming material is dissolved in the solvent at a temperature that is below the boiling point of the solvent.

Concentrated solutions wherein the solvent to solute ratio is less than about 2:1 are commonly known as flux solutions. Many pitch-type materials form concentrated flux solutions wherein the pitch is highly soluble when mixed with solvent at solvent to pitch ratios of 0.5 to 2.0. Dilution of these flux mixtures with the same solvent or a solvent in which the carbon-residue-forming material is less soluble results in partial precipitation of the carbon-residue-forming coating material. When this dilution and precipitation occur in the presence of a suspension of carbonaceous particles, the particles act as nucleating sites for the precipitation. The result is an especially uniform coating of the carbon-residue-forming material on the particles.

Coating of the carbonaceous particles can occur by mixing the particles into or with the solution of carbon-residue-forming material directly. When the particles are added to the solution of carbon-residue-forming material directly, additional solvent(s) is generally added to the resulting mixture to effect partial precipitation of the carbon-residue-forming material. The additional solvent(s) can be the same as or different than the solvents used to prepare the solution of carbon-residue-forming materials.

Alternatively, a suspension of particles of a carbonaceous material can be prepared by homogeneously mixing the particles in the same solvent used to form the solution of carbon-residue-forming material, in a combination of solvents or in a different solvent to a desired temperature, such as below the boiling point of the solvent(s). The suspension of carbonaceous particles is then combined with the solution of carbon-residue-forming material causing a certain portion of the carbon-residue-forming material to deposit substantially uniformly on the surface of the carbonaceous particles.

The total amount and morphology of the carbon-residue-forming material that precipitates onto the surface of the particles depends on the portion of the carbon-residue-forming material that precipitates out from the solution, which in turn depends on the difference in the solubility of the carbon-residue-forming material in the initial solution and in the final solution. When the carbon-residue-forming material is a pitch, a wide range of molecular weight species are typically present. One skilled in the art would recognize that partial precipitation of such a material would fractionate the material such that the precipitate would be relatively high molecular weight and high melting and the remaining solubles would be relatively low molecular weight and low melting compared to the original pitch.

The solubility of the carbon-residue-forming material in a given solvent or solvent mixture depends on a variety of factors including, for example, concentration, temperature, and pressure. As stated earlier, dilution of concentrated flux solutions causes solubility to decrease. Since the solubility of the carbon-residue-forming material in an organic solvent increases with temperature, precipitation of the coating is further enhanced by starting the process at an elevated temperature and gradually lowering the temperature during the coating process. The carbon-residue-forming material can be deposited at either ambient or reduced pressure and at a temperature of about -5°C to about 400°C. By adjusting the total ratio of solvent to the carbon-residue-forming material and the solution temperature, the total amount and hardness of the precipitated carbon-residue-forming material on the infusible carbon containing particles can be controlled.

The suspension of coated carbonaceous particles in the final diluted solution of carbon-residue-forming material generally has a ratio of solvent to carbon-residue-forming material of greater than about 2; or greater than about 4. For example, where petroleum or coal tar pitch is chosen as the carbon-residue-forming material and toluene is chosen as the solvent, the ratio of toluene to the pitch should be less than or equal to 1 for the initial solution, but may be greater than 3, or greater than 5, for the mixture of particles, carbon-residue-forming material, and combined solvent(s). It would be understood by one skilled in the art that the specific ratio of solvent to carbon-residue-forming material at the conclusion of the coating process depends on the carbon-forming-residue material and solvent selected for the process. On one hand, it is desirable to use as little solvent as possible because of the cost of solvent, while on the other hand, enough solvent is required so that the carbonaceous particles can be dispersed in the solvent.

Upon completion of the precipitation step, the coated particles are separated from the mixture of solvent, carbonaceous particles, and carbon-residue-forming material using conventional methods, such as, for example, centrifugal separation, or filtration. The particles then are optionally washed with solvent to remove residual pith (or other carbon-residue-forming material) solution and dried using conventional methods.

The liquid remaining after separation of the coated particles includes solvent(s) and residual carbon-residue-forming material. The solvent can be recovered from the solution by conventional methods, such as, for example, distillation under reduced pressure or evaporation at elevated temperature. In some embodiments, the separation of solvent from the residual carbon forming material is carried out at elevated temperature so that the carbon residue remains in liquid form. If different solvents are used to prepare the coating material solution(s) and the precipitation solution, a multi-stage distillation system may be needed to recover the multiple solvents. The recovered solvent can be directly fed back to the system and reused in the process, while the carbon-residue-forming material is discharged from the process.

The coating of the carbonaceous particles is rendered partly or completely infusible, such as by oxidative stabilization. The coating of the carbonaceous particles is stabilized by subjecting said particles to an oxidation reaction using an oxidizing agent under appropriate reaction conditions. Generally, only mild to moderate reaction conditions are required. Typically, the oxidation reaction is satisfactorily performed by contacting the coated carbonaceous particles with an oxidizing agent at elevated temperatures or by contacting the coated carbonaceous particles with an oxidizing agent at mild conditions and activating the oxidizing agent at elevated temperatures. Contact with the oxidizing agent can occur at ambient temperatures (approx. 20°C) or at moderately elevated temperatures, (up to approx. 400°C). Activation of the oxidizing agent would typically occur at moderately elevated temperatures up to 400°C. In some embodiments, the temperature of the oxidation reaction is maintained below the instantaneous melting point of the coating material, so to ensure that melting point of the coating material is not exceeded during the oxidation reaction.

The manner of oxidation depends upon the form of the oxidizing agent utilized, which may be solid, liquid or gaseous under the reaction conditions. Likewise, various oxidation reaction processes and reaction conditions may be practiced and are considered to be within the scope of the invention.

The stabilized coated carbonaceous particles are subsequently carbonized, and/or graphitized depending on the materials used. When the carbonaceous material used to produce the stabilized coated particles is a high-carbon material such as calcined coke, the particles can be directly graphitized without an intervening carbonization step. When the carboneaous material is a softer carbon such as green coke methods may include carbonizing the stabilized coated particles to a temperature of about 400°C to about 2000°C and then graphitizing the particles at a temperature of about 2200°C or higher.

According to this further step, heating of the coated and stabilized carbonaceous particles takes place under appropriate reaction conditions to insure a high degree, or a complete carbonization thereof. With regard to the temperature required to insure carbonization, desirably this is achieved by raising the temperature in a controlled manner from a starting temperature, usually ambient temperature, to the final carbonization temperature which falls within the above identified range of about 400°C to about 2000°C or within the range of about 550°C to about 1500°C.

With regard to the temperature rise, this can vary due to the nature of the stabilized coated carbonaceous particles, as well as the reaction conditions and apparatus used. With regard to the apparatus, conventional ovens are satisfactorily used, although sealed ovens wherein a specific atmosphere can be maintained during the carbonization process may also be used. Sealed ovens include those in which a reduced pressure may be maintained, such as vacuum ovens.

With regard to the atmospheric conditions for the carbonization process, the atmosphere may be ambient air up to about 850°C or an inert atmosphere at temperatures above about 400°C. Ambient air is an acceptable atmosphere when the oxygen is largely displaced during heating or during heating under vacuum. Suitable inert atmospheres include nitrogen, argon, helium, etc., which are non-reactive with the heated coated carbonaceous particles.

With regard to the temperature conditions, these can vary widely but generally, the rate of temperature rise to which the stabilized coated carbonaceous particles are subjected to achieve carbonization thereof is on the order of 0.5°C-20°C/min. Such a controlled temperature rise insures that good carbonization results are achieved. For some embodiments, the coated carbonaceous particles are heated to a final carbonization temperature gradually, and with at least one intermediate heat treatment step where prior to the final carbonization temperature used in a process, the coated carbonaceous particles are heated to an intermediate temperature, and maintained at that intermediate temperature for an interval of time. The intermediate temperature or the period for which such intermediate temperature is maintained may vary, and will be understood to depend from process to process. It is to be understood that the inclusion of one or more such periods of time during which the particles are maintained at such intermediate temperatures is beneficial in facilitating the polymerization or other ordering of the coating present on the carbonaceous particles. Indeed, the practice of several such intermediate heat treatment steps may provide benefits over the practice of a single heat treatment step in that the provision of more than one heat treatment steps in which the coated particles are maintained at a constant temperature is believed to impart improved characteristics to the coated carbonaceous particles over particles which have undergone but one or no such heat treatment step. It is further to be understood that during the heating of the coated carbonaceous particles particular attention must be paid to ensure that neither the temperatures attained during this heating process, nor the rate of the temperature rise during any part of the heating process be such that the instantaneous melting point of the coating upon the carbonaceous particles is exceeded. More simply stated, the thermal degradation of the coating is to be effected by a controlled temperature rise wherein the process temperature is maintained at or below the instantaneous melting point of the coating where said melting point is generally increasing with time during the process. In view of this requirement, heating processes include those which exhibit slower rates of temperature rise.

Subsequent to the attainment of the maximum temperature used for the carbonization process, the coated carbonaceous particles having been carbonized may be cooled to ambient temperature, although this is not an essential requirement. Again, the cooling rate is desirably controlled, i.e., to be within about 3°C-100°C/min. although, this cooling rate has been observed to be typically far less limiting as the rate of temperature rise during the carbonization process.

Processes described herein result in a smooth coating upon individual carbonaceous particles. For some embodiments, the stabilization of the coating is followed by controlled heating of the coated stabilized particles so as to effect carbonization of the coated particles with little or no clumping or self-adhesion of the individual particles. The desired results are coated particles with little or no broken fracture surfaces of the type which are characteristically formed when the separate particles fuse and must be crushed or broken apart to provide a free flowing powder. Such fracture surfaces are desirably minimized or avoided as they are believed to contribute to low electrochemical efficiency when the particles are used as an anode material in rechargeable electrical storage cells, particularly in rechargeable lithium ion batteries.

The stabilization step is carried out to render the surface of the coating infusible to the subsequent carbonization step. Oxidative stabilization allows the smooth surface produced in the coating process to be preserved in the final coated particles, as oxidative stabilization renders the surface of the coating infusible to the subsequent carbonization step.

Heat treatment of the stabilized coated particles is desirably conducted in a controlled manner to minimize fusion of the particles. One skilled in the art will recognize that highly stabilized, infusible coated particles can be heated relatively aggressively and quickly during carbonization. In contrast, relatively mildly stabilized coated particles require slower heating to avoid excessive melting of the coating and fusion of the particles. Use of a fluidized bed during stabilization and heat treatment is especially beneficial in preventing clumping and fusion of the coated particles.

Some embodiments produce a free-flowing powder of coated particles after the carbonization and/or graphitization steps, which particles exhibit little or no fusion among the particles, but can generally be broken into a free-flowing powder by simple mechanical agitation, such as by use of a stirring rod, or by rubbing between the thumb and forefinger. Where some fusion may have occurred between particles, and mechanical agitation is used to separate these particles which may result in the formation of new fracture surfaces, in some embodiments these fracture surfaces do not comprise more than 10%, or no more than 2% of the total surface area of the particles. Such are considered as being substantially smooth coatings.

The carbonized coated carbonaceous particles are also graphitized by heating them to a still higher elevated temperature which is in excess of the temperatures reached during the carbonization step. The advantage of graphitization is many-fold, and most significantly the graphitization process frequently allows for the generation of a more ordered crystal lattice in the coated carbonaceous particles. A certain improved crystal lattice provides more regular and uniform structure, and is also believed to improve the charge capacity of a battery containing the coated carbonaceous particles described herein. It is especially noteworthy that the graphitized coated particles show high capacity at a low potential of 0.0 to 0.5 volts. This is highly advantageous in making rechargeable batteries from these materials.

Graphitization also removes impurities. This purification step is especially important when impure carbons such as natural graphite are used as the source of the carbonaceous particles.

With regard to appropriate graphitization conditions, again these are to be understood to vary according to the specific nature of the carbonized, coated carbonaceous particles, as well as the reaction conditions required to bring about the graphitization. Generally, the same apparatus used for the carbonization step may also be conveniently used, it only being required that such device be capable of further elevating the temperature to a temperature or range of temperatures wherein the effects of graphitization are observed to occur. Typically, graphitization occurs in the temperature range of about 2200°C-3200°C, although lower or higher temperatures might also be used in this step. It is required only that a satisfactory degree of graphitization be obtained during this step, such that an improved charging capacity is achieved.

With regard to the process conditions it is desired that graphitization is performed in an inert atmosphere such as described previously. Graphitization can immediately follow carbonization, in which case the carbonized coated carbonaceous particles are retained in a reaction apparatus, *i.e*., an oven, and the temperature is raised up to an appropriate graphitization temperature. With regard to the rate of this temperature rise, desirably this is maintained in the same rate as that used for the carbonization step although, greater or lesser rates of temperature rise can also be utilized depending upon the nature of the carbonized coated carbonaceous particles.

In some embodiments, the pitch coating process, or carbon-residue-forming material coating process provides uniform carbon-residue-forming coating on carbonaceous particles regardless of particle size. The coating can be accomplished in a number of ways but it is especially advantageous to precipitate the coating material in the presence of a suspension of the carbonaceous particles. This coating method yields a uniform coating of controlled composition and produces a loose composite particle powder, so that the pitch-coated particles do not agglomerate and no further milling process is required in the subsequent process steps.

An oxidation reaction is carried out on the coated particles prior to carbonization of the coating. The oxidation reaction is believed to provide certain technical benefits. First, it is believed that the stabilized coated particles are relatively infusible following oxidation, which is particularly desirable in view of subsequent process steps, and subsequent handling of the particles. Second, it is believed that the stabilized coated particles are endowed with a surface which yields high efficiency when used as an electrode, particularly when the stabilized coated particles are used in an anode material in a rechargeable storage cell, particularly in a rechargeable Li-ion cell.

The coated carbonaceous particles, also referred to herein as the composite particle powders or coated particle powders, may be carbonized/graphitized at temperatures higher than 2200°C. This high temperature heat treatment after oxidation results in both the very high capacity and charge efficiency for the coated particle powders. It is especially advantageous that nearly all of the high capacity of these graphitized materials occurs at a low potential of 0.0 to 0.5 volts.

Some embodiments, contemplate use of the graphitized coated carbonaceous particles in electrodes, particularly anodes, of electrical storage cells, particularly in rechargeable batteries. For some embodiments, a method for the manufacture of an electrical storage cell includes incorporating, into an anode of the electrical storage cell, coated graphitic materials comprising coated fine carbonaceous particles having a coating layer formed of an oxidized, carbon-residue-forming material.

In some embodiments, the coated carbonaceous particles produced from the processes described above are formed using the conventional techniques into electrodes, particularly anodes. While not described with particularity herein, it is contemplated that known-art manufacturing techniques for the assemblage of such electrodes, as well as known-art devices which facilitate in the formation of such electrodes can be used. A particular advantage which is obtained by the use of the coated carbonaceous particles taught herein lies in the fact that due to their coating, they rarely fuse together thus resulting in a flowable powder. Such flowable powder not only facilitates in the transport of the coated carbonaceous materials, but also aids in the manufacture of the electrode since the powder provides a good degree of packing and uniformity. Such a good degree of packing of course very favorably impacts on the volumetric capacity of any battery, particularly a rechargeable battery of which these electrodes form a part, as an increased charge carrying capacity per unit volume of the electrode permits for the decrease in the overall size of a battery while maintaining good performance characteristics thereof.

Another advantageous feature of the coated carbonaceous particles is that they have a very high first cycle efficiency. First cycle efficiency of the coated carbonaceous particles are typically >90% when the carbon electrode is electrochemically cycled between 0 and 1 volts versus lithium metal. By comparison, first cycle efficiency is as low as 50% in the carbonaceous particles before coating and is typically 90% or less in coated particles produced by other techniques previously known in the art. In some embodiments, the carbonaceous particles remain uncoated and still provide >90% first cycle efficiency when precursor for the carbonaceous particle is a coke material selected to have an initial volatile matter content prior to heat treating for carbonization that is greater than 10%, greater than 15%, or greater than 20%. The coke materials with these percentages of volatile matter content may be coated as described herein or may self coat as volatile matter is driven off during subsequent heat treatments to carbonize the particles.

Desirable attributes relate to particle size distribution of the anode powders. While very small particles are desirable for high rate anode powders, it turns out that there are definite advantages in not having the particles to be too small. Typically, the average particle size (based on a longest dimension) is selected to be less than 30 microns and for high rate applications, is selected to be 15 microns or smaller. Averages as described herein may be based on analysis of a sampling, which represents a portion (e.g., 100 grams or 10 grams) taken at random from a larger quantity of the anode powder. For some embodiments, the size range selected for the average particle size is between about 5 and 10 microns or about 8 microns. As noted above, particles that are much smaller than 5 microns and more specifically, particles that are smaller than 1 micron in their maximum dimension may present problems. Particles of less than one micron or particles that are up to 1.5 or 2 microns according to some embodiments may have too much surface area for the volume of the particle. One theory proposes that high surface area anode powders in a battery that is in an elevated temperature condition or during rapid discharge is involved with destructive and heat producing side reactions. It is believed that these side reactions tend to occur first or most easily in the small particles. The greater concern is not the actual side reaction, but the resistance of the particle to fracture to expose more reactive surface area to the electrolyte. Small particles are believed not to have as much inherent structural resistance to fracturing.

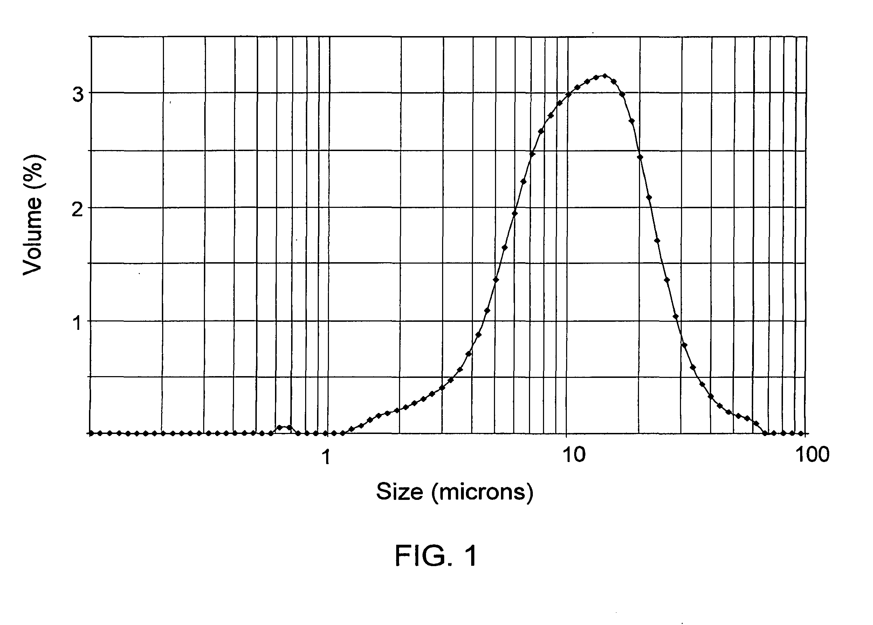

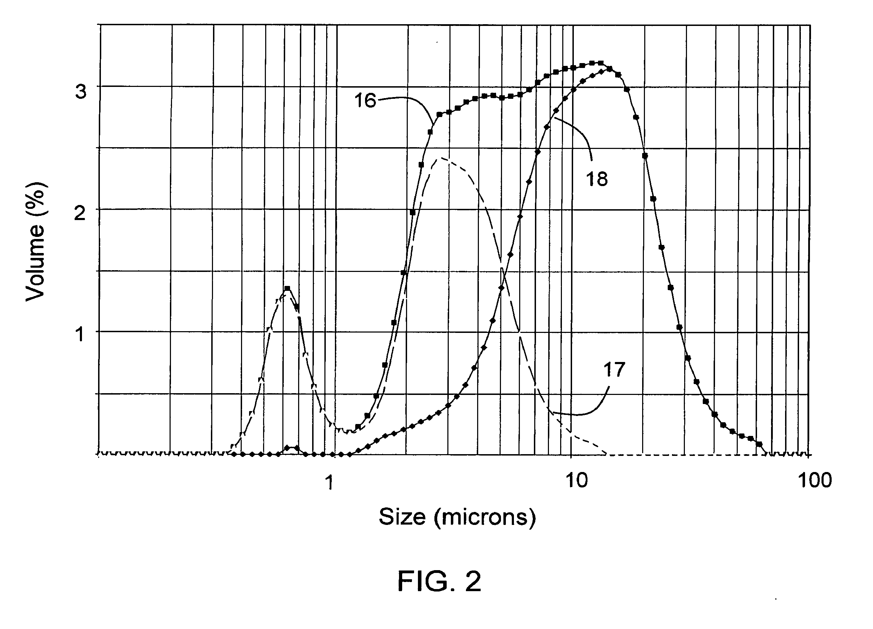

To provide an anode powder that does not have the smaller particle size present, the powders may be classified by a high efficiency fines classifier to substantially reduce the quantity of sub micron particles and near micron sized particles to reduce the population of particles that are less than 2 microns. This is best illustrated in Figure 1 where the average is indicated at between 10 and 11 microns and there are very few particles less than 1 micron. Even the population of particles less than 2 and 3 microns represents a small percentage of the overall population of particles. For comparison, Figure 2 provides data from the same sample of anode powder where the powder from the manufacturing process is indicated by the curve labeled 16 and the removed particles indicated by the curve labeled 17. Clearly, a significant volume of particles less than 1 micron was produced by the manufacturing process and was removed to provide an anode powder having a particle size distribution curve indicated by the curve labeled 18.

For some embodiments, the precursor coke material itself is selected to have a less ordered structure relative to precursor such as needle coke materials. As the powders are produced from the precursors, the substrate or underlying particle tends to graphitize, but not form the larger crystals typically seen in prior anode powders. The precursors that have been previously utilized are derived from premium coke or needle coke materials. Premium or needle cokes tend to graphitize into significant crystalline structures that are quite suitable for battery use. That is, quite suitable under ordinary operating conditions. Anode powders made using needle cokes are believed to have limited resistance to further fracturing once the coating has been breached by the electrolyte. The edges of long graphite planes are easily opened by the side reaction with the electrolyte revealing more surface area for further side reactions.

Another issue that is believed to influence battery performance is the surface area of particles regardless of particle size. Needle coke tends to create particles that are flat and have a high aspect ratio. Some have described the particles as chips or potato chips. It has been found that by using anode or regular coke as the precursor, the crystalline structure is much more disordered and tends to provide a two fold improvement. For purposes of avoiding confusion, this material is hereafter called "regular coke" although "anode coke" is a very common name for this kind of material. The simple reason for calling this material "anode coke" is because much of it ends up being using to produce anodes for aluminum smelting. Since the term "anode" is used in the current context of batteries, reference to "regular coke" herein avoids creating confusion.

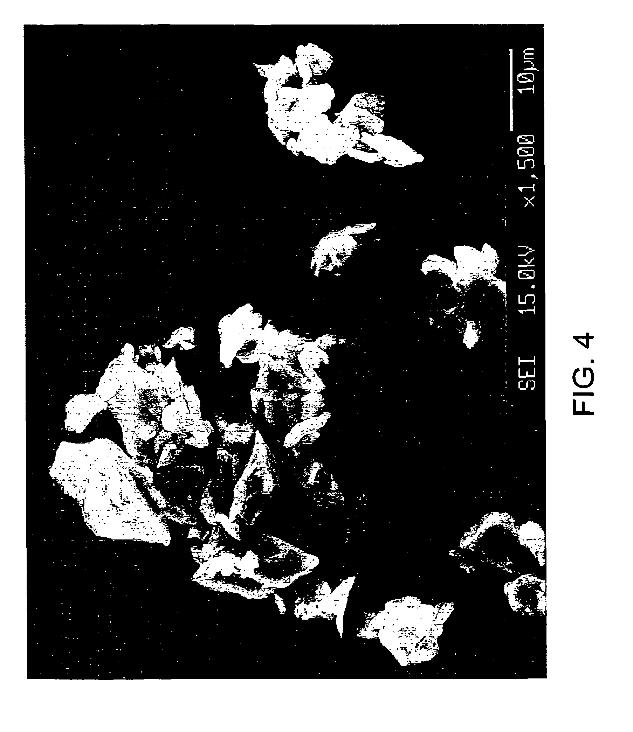

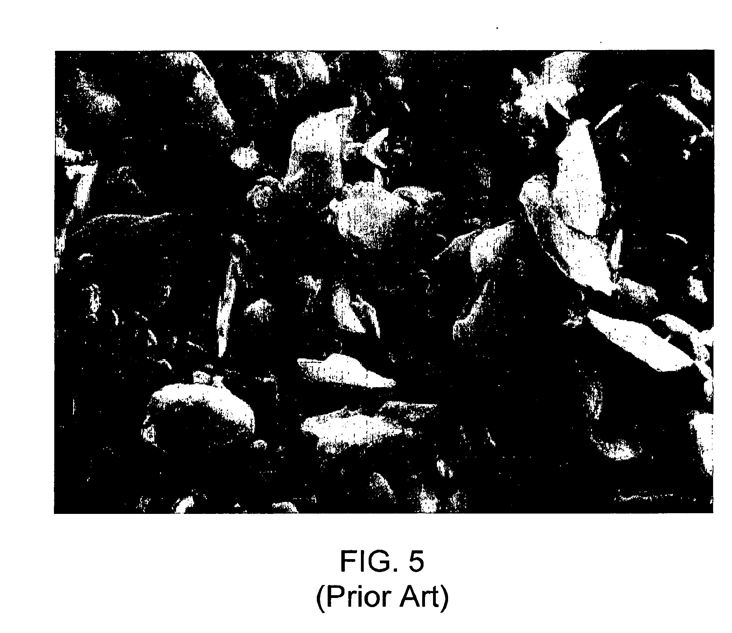

The particles made with regular coke precursors tend to have a lower aspect ratio (e.g., 3 to 5:1 versus 6 to 10:1 for particles made from needle coke precursors). The particles thus appear in a slightly plumper shape as compared to chips. The particles define more of a lima bean shape than potato chip shape, although without the coating they would have very jagged edges. The lower aspect ratio provides equivalent particle masses with lower surface area which is believed to provide higher efficiency and lower heat evolution. The image presented in Figure 4 provides a somewhat representative example of a thicker shape as compared to a more chip like shape of the needle coke particles presented in Figure 5. With the coating, both shapes have smooth outer coatings, but the regular coke precursor powder has a lower surface area to mass ratio.

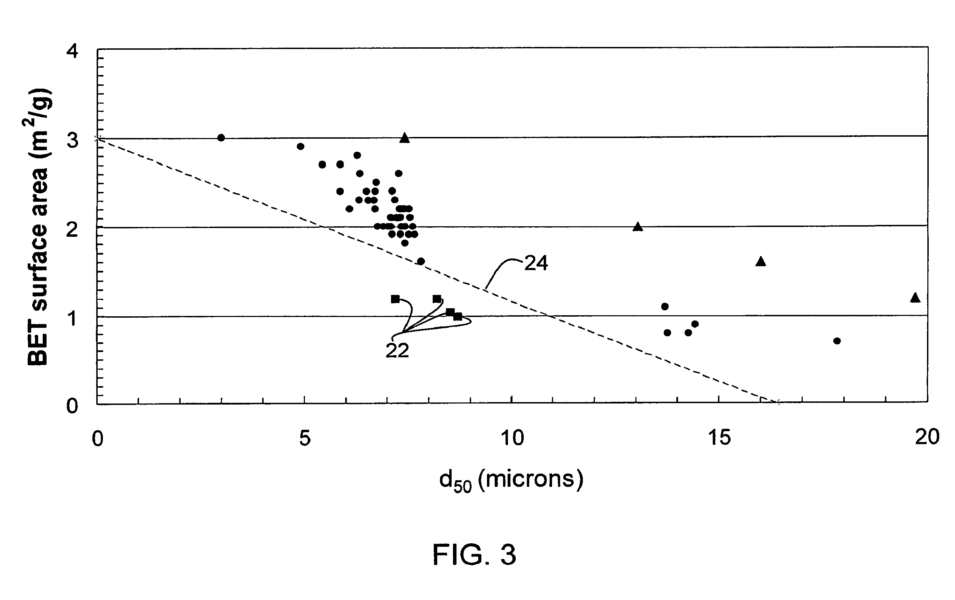

In particular, a chart shown in Figure 3 illustrates BET surface areas for various types of powders. As used herein, the BET surface areas were determined using nitrogen (N₂) as adsorptive material and calculating the BET surface area by standard BET procedure. Most of the data points are based on powders made from needle coke precursor material and are represented by circles for comparison with four square data points 22 identifying powders made from regular coke precursor material. An additional four triangle shaped data points represent commercially available anode powders, such as graphite anode material known as mesophase carbon micro beads (MCMB). Each data point represents a separate sample of produced anode powder with the fiftieth percentile of the dimension indicated on the x-axis and the average BET surface area of the sample indicated on the y-axis. The anode powder made with regular coke precursor material has a lower BET surface area than prior anode powders of corresponding average sizes. For example, the BET surface area is less than 1.5 square meters per gram (m²/g) for powders with average particle size between 7 and 9 microns. As shown by graphical depiction in Figure 3, the square data points 22 fall below a dashed line 24 and can thereby be distinguished based on combinations of average particle sizes and BET surface areas. In a corresponding mathematical expression, the BET surface area of the anode powder for some embodiments is the formula BET surface area (in m²/g) less than or equal to the d₅₀ in microns multiplied by -0.183 plus 3 or BET Surface Area m²/g ≤ 3 - (0.183)d₅₀ microns (i.e., an equation for the dashed line 24 is defined as y = -0.183x + 3).

Another potential advantage of the anode powder made with regular coke precursor material is resistance to having graphite planes opened up by side reactions with the electrolyte. It is observed that anode powders made from regular coke precursor materials have a less graphitic structure in the underlying material as compared to anode powders made from needle coke precursor materials. The anode powders of some embodiments appear to have more entangled crystals or a less ordered structure than anode powders made from needle coke precursor materials. It is believed that the smaller, less ordered and more entangled crystals may be more resistant than more graphitic structures for revealing new surface area to the electrolyte. Perhaps shorter plane lengths of the graphitic sheets within the particle are more resistant to the propagation of fractures so that, to the extent that the side reaction is fracturing the particles of the anode powder, smaller portions of new surface area are actually being exposed. As such, the destructive process is slower and less potentially hazardous.

A number of factors distinguish between regular coke precursors and needle coke precursors. One such distinction relates to price and favors some embodiments described herein since regular coke is less expensive than needle coke. For example, it is not uncommon for premium coke to cost about five times per ton what regular coke costs. A person having ordinary skill in the art would not confuse regular coke and premium or needle coke. Needle coke is denser than regular coke, which is generally less than about 1.7 g/cc real density prior to calcining. Also, regular coke has a lower fixed carbon content being about 95% or less while premium or needle coke is typically higher. The regular coke utilized in some embodiments defines a fixed carbon content that is less than 90%, less than 80%, or between 85% and 70%.

While in some embodiments, the precursor material has not yet been calcined, most coke is calcined and the properties of calcined coke are commonly known for regular coke versus needle or premium coke. Premium coke is denser with real density for calcined premium coke being between about 2.12 to 2.17 g/cc while calcined regular coke has a lower density of between 2.01 to 2.10 g/cc. A second recognized parameter for distinguishing premium coke from regular coke is by the coefficient of thermal expansion ("CTE"). Premium coke has very minimal dimension change response to heat and would be expected to have a CTE of between about 0 and about 5 x 10⁻⁷ cm/cm/°C where regular coke has a CTE of about 9 x 10⁻⁷ to about 30 x 10⁻⁷ cm/cm/°C.

As noted earlier, it is within the level of skill in the art to use any technique described herein to enhance the performance of a battery in the rapid discharge or elevated temperature situation. However, some embodiments combine techniques. For example, a low BET surface area anode powder made from a regular coke precursor material may substantially exclude particles below a threshold size.

The anode powders described herein are anticipated to meet the challenge of high rate lithium-ion battery applications, including power tools, hybrid-electric and electric vehicles, and aerospace. The anode powders may provide one or more of superior safety, rate capability and cycle-life performance. As described above, coke is identified and processed for physical stability. The resulting graphite or anode powder is composed of singular particles of controlled size distribution, (not "assembled" from smaller particles). The controlled particle size distribution produces batteries with longer cycle life and enhanced thermal stability. The base material also facilitates production of small, conductive, graphite particles that enhance performance in high rate battery applications.

The anode powders according to some embodiments are observed to have a uniform, homogenous, graphite-on-graphite surface coating. Each particle may be individually coated after the final particle size is established. The surface coating technology produces smooth particle surfaces with minimal roughness, irregularities, or discontinuities, thus reducing the surface area of the particles. This, in turn, is believed to yield batteries with improved thermal stability and maximized first-cycle coulombic efficiency. The anode powders may be processed to yield particles with a smooth surface and rounded edges. The rounded morphology of anode powder particles offers elevated structural integrity and reduces BET surface area. Each particle may be a singular coated entity, less prone to structural deterioration during cycling which may eliminate the need for costly electrolyte additives. As described above, when subjected to high temperatures, the observations are that the anode powders in the charged state evolve a lower amount of heat compared to other anode materials. The anode powders may be a simple drop-in substitute for other anode materials or, alternatively, may provide better performance for cells that are designed to take full advantage of the anode powder performance. Such design considerations may include lower cost cell by reducing or eliminating the need for vinylene carbonate (an expensive chemical to stabilize the Surface Interface Layer at the anode. The improved anode materials have more desirable surface wetability thereby allowing faster fill times for cells and batteries. The improved anode materials provide high first-cycle efficiency which may allow the reduction in the size of costly cathodes for battery producers. Finally, the improved anode powders provide high C-rate performance, particularly at low temperature, which enables reduced cell pack costs and the corresponding weight savings by enabling the application to access more of the cell capacity at high rate.

Example:

Powder preparation - A green petroleum regular coke (85% fixed carbon content) was milled using a jet-mill to make a resulting green coke powder that had an average particle size of about 8 microns. The resulting green coke powder was heated at 850°C for 2 hours in nitrogen environment.

Next, 500 grams of the powder after being heated was dispersed in 2500 grams of xylene to form premix A in a sealed stainless steel vessel and heated to 140°C while being continuously agitated. Further, 500 grams of a petroleum pitch was completely dissolved in 500 grams of xylene to form premix B. The premix B was also heated to 140°C and then poured into the premix A and thoroughly mixed together. A resulting mixture was heated at 160°C for 10 minutes and then cooled to room temperature while the mixture was continuously agitated. A pitch-coated powder that formed in the mixture was separated out by filtration and washed twice with 1000 ml of xylene and then dried under vacuum. A resulting dry powder product weighed 550 grams, giving 10% pitch on the powder product.

The powder product was uniformly spread on trails and placed in a furnace, and heated in the following sequences under reduced air pressure (about -15 inch Hg): 5°C/minute to 180°C, 1°C/minute to 250°C, held at 250°C for 2 hours, 1°C/minute to 280°C, held at 280°C for 8 hours, and then cooled to ambient temperature. During the heating, oxygen gas in the air reacted with coated pitch such that, as a result, reacted pitch film of the powder product became infusible and also facilitated yield of a desired crystalline structure upon subsequent carbonization and graphitization. Thereafter, the powder product was transferred into an induction furnace and heated at 2900°C for one hour in argon gas and then cooled to room temperature.

Electrochemical test - The powder that was prepared was evaluated as the anode material for lithium ion batteries in coin cells with lithium metal foil as the other electrode. The powder was processed into a thin film on copper substrate with a composition of 7 wt% polyvinylidene fluoride (PVDF). In preparing the electrode, a slurry mix was prepared by thoroughly mixing the powder and a 10 wt% PVDF solution. The slurry mix was cast as a film on a copper foil using a hand doctor-blade. The film having been cast was then dried on a hot plate at 110°C for 30 minutes, and subsequently was pressed to a density of about 1.4 g/cc through a hydraulic rolling press.

Next, disks of 1.65 cm² were punched out from the film and used as the positive electrode in a coin cell for electrochemical tests. The other electrode was lithium metal. A glass mat and a porous polyethylene film (Cellgard^{™}) were used as the separator between the electrode and Li metal foil. Both the electrodes and separator were soaked in 1 molar LiPF₆ electrolyte. The solvent for the electrolyte consisted of 40 wt% ethylene carbonate, 30 wt% diethyl carbonate, and 30 wt% dimethyl carbonate. The cells were first charged under a constant current until the cell voltage reached 0 volt and then discharged under a constant current until the cell voltage reached 2.0 volts. The electrical charges passed during charging and discharging were recorded and used to determine the capacity of the powder and the coulombic efficiency for each cycle. All the tests were conducted at room temperature (∼23°C). The first discharge capacity and coulombic efficiency are given for the Example in Table 1.

Thermal stability tests - Some of the cells were finally charged to 300 mAh/g and then placed in an environmental chamber where the temperature was controlled at 70°C for 72 hours. Subsequently, the cells were recovered from the chamber and cooled to ambient temperature, and discharged to 2.0 volts to determine the remaining capacity or capacity retention.

For the thermal stability tests, after the electrodes were charged to 300 mAh/g, the cells were dissembled and the electrodes were removed from the cells. The electrodes were immediately placed in stainless steel capsules (0.1 cc) and hermetically sealed. All these operations were done in a glove box with an oxygen gas or moisture level of less than 5 ppm. These capsules were placed in a micro-calorimctcr and heated at 10°C/minute from 30°C to 300°C. Resulting heat flow from the capsules during the temperature ramping was recorded. A total amount of exothermic heat was calculated by integrating the heat flow from the onset temperature to 220°C.

Comparative Example 1:

A comparison petroleum coke (92% fixed carbon content) was used as precursor material to illustrate influence of higher coke grade on such factors as BET surface area as described herein. The comparison petroleum coke was used instead of the green petroleum regular coke. Otherwise, preparation and test procedures for the Comparative Example 1 and the Example as described herein were alike.

Comparative Example 2:

A commercial graphite anode material was also evaluated for electrochemical and thermal properties in accordance with procedures described for the Example. The graphite anode material was a powder made from spherical carbon beads, which were MCMB. Average particle size of the powder was about 10 microns.

As shown in Table 1, the Example exhibits a higher initial coulombic efficiency and higher capacity retention, and releases lower exothermic heat than the Comparative Example 1 or the Comparative Example 2. Thus, the powder prepared in the Example provided unexpected superior results for use as anode material for high power and large format lithium ion batteries. With reference to Figure 3, the Example had a combination BET surface area and average particle size below the dashed line whereas both the Comparative Examples 1 and 2 had combinations of BET surface area and average particle size that were above the dashed line.

| Table 1 | | | |
|---|---|---|---|
| Property | Example | Comparative Example 1 | Comparative Example 2 |
| Average particle size (microns) | 8 | 8 | 10 |
| BET surface area (m²/g) | 1.1 | 1.6 | 2.0 |
| Specific capacity (mAh/g) | 320 | 330 | 310 |
| Initial coulombic efficiency (%) | 96 | 95.5 | 92 |
| Capacity retention (%) | 86 | 82 | 73 |
| Exothermic heat (J/g) | 196 | 285 | 400 |

The preferred embodiment of the present invention has been disclosed and illustrated. However, the invention is intended to be as broad as defined in the claims below.

## Claims

1. A process, comprising:
milling regular coke into coke particles;
depositing a coating of carbon-residue-forming material onto surfaces of the coke particles;
oxidizing the coke particles that are coated, wherein the oxidizing provides stabilized coated particles rendered infusible; and
graphitizing the stabilized coated particles to provide graphitized particles forming a powder of coated carbonaceous material in which y ≤ -0.183x + 3, where y is BET surface area in square meters per gram and x is average size of a longest dimension of the graphitized particles in microns.

2. The process according to claim 1, wherein the BET surface area is less than 1.5 square meters per gram and the average size of a longest dimension of the graphitized particles is between 7 and 9 microns.

3. The process according to claim 1, further comprising selecting a green coke having a real density of less than 1.7 grams per cubic centimeter, wherein the green coke selected provides the regular coke that is milled.

4. The process according to claim 1, further comprising removing substantially all of the coke particles having a particle size in a longest dimension that is less than 1 micron, wherein the milling forms the particles in which average size of a longest dimension of the coke particles is less than 15 microns.

5. The process according to claim 1, wherein the regular coke is green coke.

6. The process according to claim 1, wherein the graphitizing occurs at a temperature of at least 2200°C.

7. A powder of coated carbonaceous material, comprising:
carbonaceous milled particles having a coating layer, wherein the coating layer is formed of an oxidized and graphitized carbon-residue-forming material and the particles within a sampling of the powder have a BET surface area in square meters per gram that is defined by y ≤ -0.183x + 3, where y is the BET surface area and x is average size of a longest dimension of the particles in microns.

8. The powder according to claim 7, wherein the particles of the sampling have an average aspect ratio of between 3:1 and 5:1.

9. The powder according to claim 7, wherein the average size of a longest dimension of the particles within the sampling is between 7 and 9 microns.

10. The powder according to claim 7, wherein the BET surface area is less than 1.3 square meters per gram and the average size of a longest dimension of the graphitized particles is between 7 and 9 microns.

11. The powder according to claim 7, wherein the sampling is substantially free of particles with a longest dimension less than 1 micron.

12. A rechargeable battery, comprising:
anode powder formed of particles from milled regular coke precursor material and a carbon-residue-forming material coating thereon that has been oxidatively stabilized and graphitized, wherein y ≤ -0.183x + 3, where y is a BET surface area of the particles within a sampling of the powder defined in square meters per gram and x is average size of the particles in microns.

13. The rechargeable battery according to claim 12, wherein average aspect ratio of the particles within the sampling is between 3:1 and 5:1.

14. The rechargeable battery according to claim 12, wherein substantially no particles within the sampling have a longest dimension less than I micron.

15. The rechargeable battery according to claim 12, wherein the average particle size of a longest dimension of the particles within the sampling is less than 10 microns and at least 95 percent of the particles within the sampling have a longest dimension larger than 3 microns.

## Patentansprüche

1. Prozess, der Folgendes umfasst:
Zerkleinern von regulärem Koks zu Kokspartikeln;
Abscheiden einer Beschichtung aus einem einen Kohlenstoffrückstand bildenden Material auf Oberflächen der Kokspartikel;
Oxidieren der Kokspartikel, die beschichtet sind, wobei das Oxidieren umschmelzbar gemachte, stabilisierte, beschichtete Partikel bereitstellt; und
Graphitisieren der stabilisierten, beschichteten Partikel, um graphitisierte Partikel bereitzustellen, die ein Pulver aus beschichtetem kohlenstoffhaltigem Material bilden, in dem y ≤ -0,183x + 3 ist, wobei es sich bei y um eine spezifische BET-Fläche in Quadratmetern pro Gramm und bei x um eine mittlere Größe einer längsten Abmessung der graphitisierten Partikel in Mikron handelt.

2. Prozess nach Anspruch 1, wobei die spezifische BET-Fläche weniger als 1,5 Quadratmeter pro Gramm und die mittlere Größe einer längsten Abmessung der graphitisierten Partikel zwischen 7 und 9 Mikron beträgt.

3. Prozess nach Anspruch 1, darüber hinaus umfassend, einen Grünkoks mit einer realen Dichte von weniger als 1,7 Gramm pro Kubikmeter auszuwählen, wobei der ausgewählte Grünkoks den regulären Koks bereitstellt, der zerkleinert wird.

4. Prozess nach Anspruch 1, darüber hinaus umfassend, im Wesentlichen alle Kokspartikel mit einer Partikelgröße in einer längsten Abmessung, die weniger als 1 Mikron beträgt, zu entfernen, wobei das Zerkleinern die Partikel bildet, bei denen eine mittlere Größe einer längsten Abmessung der Kokspartikel weniger als 15 Mikron beträgt.

5. Prozess nach Anspruch 1, wobei es sich bei dem regulären Koks um Grünkoks handelt.

6. Prozess nach Anspruch 1, wobei das Graphitisieren bei einer Temperatur von mindestens 2200°C stattfindet.

7. Pulver aus beschichtetem kohlenstoffhaltigem Material, Folgendes umfassend:
kohlenstoffhaltige zerkleinerte Partikel mit einer Deckschicht, wobei die Deckschicht aus einem oxidierten und graphitisierten, einen Kohlenstoffrückstand bildenden Material gebildet ist, und die Partikel in einer Stichprobe des Pulvers eine spezifische BET-Fläche in Quadratmetern pro Gramm haben, die durch y ≤ -0,183x + 3 definiert ist, wobei es sich bei y um die spezifische BET-Fläche und bei x um eine mittlere Größe einer längsten Abmessung der graphitisierten Partikel in Mikron handelt.

8. Pulver nach Anspruch 7, wobei die Partikel der Stichprobe ein mittleres Seitenverhältnis zwischen 3:1 und 5:1 haben.

9. Pulver nach Anspruch 7, wobei die mittlere Größe einer längsten Abmessung der Partikel in der Stichprobe zwischen 7 und 9 Mikron beträgt.

10. Pulver nach Anspruch 7, wobei die spezifische BET-Fläche weniger als 1,3 Quadratmeter pro Gramm und die mittlere Größe einer längsten Abmessung der graphitisierten Partikel zwischen 7 und 9 Mikron beträgt.

11. Pulver nach Anspruch 7, wobei die Stichprobe im Wesentlichen frei von Partikeln mit einer längsten Abmessung von weniger als 1 Mikron ist.

12. Wiederaufladbare Batterie, die Folgendes umfasst:
Anodenpulver, das aus Partikeln aus zerkleinertem regulärem Koksvorläufermaterial und einer einen Kohlenstoffrückstand bildenden Materialbeschichtung darauf gebildet ist, die oxidativ stabilisiert und graphitisiert wurde, wobei y ≤ -0,183x + 3 ist, wobei es sich bei y um die spezifische BET-Fläche der Partikel in einer Stichprobe des Pulvers definiert in Quadratmetern pro Gramm und bei x um eine mittlere Größe der Partikel in Mikron handelt.

13. Wiederaufladbare Batterie nach Anspruch 12, wobei ein mittleres Seitenverhältnis der Partikel in der Stichprobe zwischen 3:1 und 5:1 beträgt.

14. Wiederaufladbare Batterie nach Anspruch 12, wobei im Wesentlichen keine Partikel in der Stichprobe eine längste Abmessung von weniger als 1 Mikron haben.

15. Wiederaufladbare Batterie nach Anspruch 12, wobei die mittlere Partikelgröße einer längsten Abmessung der Partikel in der Stichprobe weniger als 10 Mikron beträgt und mindestens 95 Prozent der Partikel in der Stichprobe eine längste Abmessung haben, die größer als 3 Mikron ist.

## Revendications

1. Procédé comprenant les étapes consistant à :
broyer du coke normal en particules de coke ;
déposer un revêtement de matériau formateur de résidus de carbone sur les surfaces des particules de coke ;
oxyder les particules de coke qui sont revêtues, l'oxydation fournissant des particules revêtues stabilisées rendues infusibles ; et
graphiter les particules revêtues stabilisées pour fournir des particules graphitées formant une poudre d'un matériau carboné revêtu, dans lequel y ≤ -0,183x + 3 où y est une surface spécifique BET en mètres carrés par gramme et x est la taille moyenne dans la dimension la plus longue des particules graphitées en micromètres.

2. Procédé selon la revendication 1, dans lequel la surface spécifique BET est inférieure à 1,5 mètre carré par gramme et la taille moyenne dans la dimension la plus longue des particules graphitées se situe entre 7 et 9 micromètres.

3. Procédé selon la revendication 1, comprenant en outre le choix d'un coke vert ayant une masse volumique réelle inférieure à 1,7 gramme par centimètre cube, dans lequel le coke vert choisi fournit le coke normal qui est broyé.

4. Procédé selon la revendication 1, comprenant en outre l'élimination de sensiblement toutes les particules de coke ayant une taille particulaire dans la dimension la plus longue qui est inférieure à 1 micromètre, dans lequel le broyage forme les particules dans lesquelles la taille moyenne dans la dimension la plus longue des particules de coke est inférieure à 15 micromètres.

5. Procédé selon la revendication 1, dans lequel le coke normal est du coke vert.

6. Procédé selon la revendication 1, dans lequel le graphitage se produit à une température d'au moins 2200 °C.

7. Poudre d'un matériau carboné revêtu, comprenant :
des particules carbonées broyées ayant une couche de revêtement, dans laquelle la couche de revêtement est formée d'un matériau formateur de résidus de carbone oxydé et graphité et les particules au sein d'un échantillonnage de la poudre ont une surface spécifique BET en mètres carrés par gramme qui est définie par y ≤ -0,183x + 3, où y est la surface spécifique BET et x est la taille moyenne dans la dimension la plus longue des particules en micromètres.

8. Poudre selon la revendication 7, dans laquelle les particules de l'échantillonnage ont un rapport d'aspect moyen entre 3:1 et 5:1.

9. Poudre selon la revendication 7, dans laquelle la taille moyenne dans la dimension la plus longue des particules au sein de l'échantillonnage se situe entre 7 et 9 micromètres.

10. Poudre selon la revendication 7, dans laquelle la surface spécifique BET est inférieure à 1,3 mètre carré par gramme et la taille moyenne dans la dimension la plus longue des particules graphitées se situe entre 7 et 9 micromètres.

11. Poudre selon la revendication 7, dans laquelle l'échantillonnage est sensiblement exempt de particules ayant la dimension la plus longue inférieure à 1 micromètre.

12. Pile rechargeable, comprenant :
de la poudre anodique formée de particules provenant d'un matériau précurseur de coke normal broyé et d'un revêtement de matériau formateur de résidus de carbone qui lui a été appliqué et qui a été stabilisée et graphitée par oxydation, dans laquelle y ≤ -0,183x + 3, où y est une surface spécifique BET des particules au sein d'un échantillonnage de la poudre définie en mètres carrés par gramme et x est une taille moyenne des particules en micromètres.

13. Pile rechargeable selon la revendication 12, dans laquelle le rapport d'aspect moyen des particules au sein de l'échantillonnage se situe entre 3:1 et 5:1.

14. Pile rechargeable selon la revendication 12, dans laquelle sensiblement aucune particule au sein de l'échantillonnage n'a une dimension la plus longue inférieure à 1 micromètre.

15. Pile rechargeable selon la revendication 12, dans laquelle la taille particulaire moyenne dans une dimension la plus longue des particules au sein de l'échantillonnage est inférieure à 10 micromètres et au moins 95 pour cent des particules au sein de l'échantillonnage ont une dimension la plus longue supérieure à 3 micromètres.
